(19) Europäisches Patentamt
European Patent Office
Office européen des brevets

(11) Veröffentlichungsnummer: **0 300 310**
**A2**

(12) **EUROPÄISCHE PATENTANMELDUNG**

(21) Anmeldenummer: 88111033.2

(22) Anmeldetag: 11.07.88

(51) Int. Cl.4: **G11B 5/706 , H01F 1/11**

(30) Priorität: 23.07.87 DE 3724379

(43) Veröffentlichungstag der Anmeldung:
**25.01.89 Patentblatt 89/04**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Meisen, Ulrich, Dr.**
**Breslauer Strasse 31**
**D-4150 Krefeld 11(DE)**
Erfinder: **Buxbaum, Gunter, Dr.**
**Holzapfelweg 2**
**D-4150 Krefeld 1(DE)**

(54) Verfahren zur Herstellung feinteiliger magnetischer Hexaferritpigmente.

(57) Die vorliegende Erfindung betrifft ein Verfahren zur Herstellung feinteiliger magnetischer Hexaferritpigmente der allgemeinen Zusammensetzung:

$$M(I)_x M(II)_y M(III)_z Fe_{12-(y+z)} O_{19}$$

wobei $0 <= x <= 3$, $0,1 <= (y+z) <= 3$, $(x+y) >= 1,0$
$M(I)$ = Ba, Sr, Ca, Eu, Pb ober eine Kombination von RE und einwertigen Kationen der Gruppe Li, Na, K, Rb, Cs, Ag, Tl und RE = La, Y, Sc, Bi oder andere Seltenerdmetalle ist und
$M(II)$ = Fe(II), Mn, Co, Ni, Zn, Cu, Cd, Mg, Sn(II) und
$M(III)$ = Ti, Zr, Hf, Ga, Sn(IV), Ge, In, Sc, Nb, Ta, V, As, Sb, Bi, Al, Cr(III), Mo, W
bedeuten, wobei die Hexaferritteilchen einen Durchmesser von 0,01 bis 1 μm und eine Dicke von 0,01 bis 1 μm aufweisen, wobei Teilchendurchmesser und Teilchendicke annähernd gleich sind.

EP 0 300 310 A2

## Verfahren zur Herstellung feinteiliger magnetischer Hexaferritpigmente

Die vorliegende Erfindung betrifft ein Verfahren zur Herstellung feinteiliger magnetischer Hexaferritpigmente der allgemeinen Zusammensetzung:

$$M(I)_xM(II)_yM(III)_zFe_{12-(y+z)}O_{19}$$

wobei $O< = x< = 3$, $0,1< = (y+z)< = 3$, $(x+y)> = 1,0$
M(I) = Ba, Sr, Ca, Eu, Pb ober eine Kombination von RE und einwertigen Kationen der Gruppe Li, Na, K, Rb, Cs, Ag, Tl und RE = La, Y, Sc, Bi oder andere Seltenerdmetalle ist und
M(II) = Fe(II), Mn, Co, Ni, Zn, Cu, Cd, Mg, Sn(II) und
M(III) = Ti, Zr, Hf, Ga, Sn(IV), Ge, In, Sc, Nb, Ta, V, As, Sb, Bi, Al, Cr(III), Mo, W
bedeuten, wobei die Hexaferritteilchen einen Durchmesser von 0,01 bis 1 $\mu$m und eine Dicke von 0,01 bis 1 $\mu$m aufweisen, wobei Teilchendurchmesser und Teilchendicke annähernd gleich sind.

Entsprechende Hexaferritpigmente sind bekannt aus der DE-A 35 37 624.

Verfahren zur Herstellung dieser Hexaferritpigmente, sowie deren Verwendung im magnetischen Aufzeichnungsmedien. Hexaferrite weisen Koerzitivfeldstärken auf, wie sie für die hochdichte magnetische Speicherung benötigt werden (45 bis 120 kA/m). Sie sind Metallpigmenten in ohrer Korrosionsstabilität und $CrO_2$ und Co-dotierten Eisenoxidpigmenten in ihrer Thermostabilität überlegen. Derartige Hexaferritpigmente mit Magnetoplumbt-(M)- oder W-Struktur wurden für diese Zwecke vorgeschlagen. Zur Senkung der Koerzitivkraft feinteiliger reiner Barium-, Strontium- oder Bleihexaferrite wird üblicherweise mit Co- und Ti-Ionen dotiert. Bisher sind verschiedenste Verfahren zur Herstellung derartiger Hexaferrite bekannt geworden. Bei dem Verfahren der Mischfällung, wie z.B. in US-A 4.120.807 beschrieben geht man von Lösungen von Metallsalzen aus, die durch NaOH oder $Na_2CO_3$ oder ähnliche Fällungsmittel gefällt werden. Da üblicherweise von Metallchloriden ausgegangen wird, ergeben sich erhebliche Korrosionsprobleme durch das herbei entstehende NaCl, so daß das Verfahren schwierig durchführbar ist. Weiterhin ist die Herstellung derartiger Bariumferrite durch hydrothermale Verfahren, wie in US-A 4.585.568 beschrieben möglich. Nachteil derartiger Verfahren sind jedoch hohe Verfahrenskosten und geringer Durchsatz. Es ist ebenfalls möglich Bariumferrite durch Temperung in Salzschmelzen herzustellen, was aber mit erheblichen Korrosionsproblemen verbunden ist. Ein weiteres Verfahren geht von anorganischen Gläsern aus. Dieses in der US 4 341 648 beschriebene Verfahren, nach dem geeignete Hexaferrite erhalten werden können, zeichnet sich jedoch durch sehr hohe Verfahrenskosten bedingt durch die hohen Schmelztemperaturen und durch Korrosionsprobleme durch die borhaltige Schmelze aus. Des weiteren ist das Verfahren nicht leicht zu beherrschen. Daneben sind einige weitere Verfahren bekanntgeworden, von denen jedoch keines derzeit zur Darstellung feinteiliger Bariumhexaferrite einer definierten Teilchengröße und Form geeignet ist.

Es ist also das Ziel der vorliegenden Erfindung ein preiswerten durchführbares Verfahren zu entwickeln, daß zu geeigneten feinteiligen Hexaferriten führt.

Gegenstand der Erfindung ist auch die Verwendung derartiger Hexaferritpigmente in magnetischen Aufzeichnungsmedien wie Bändern und Platten, nicht löschbaren Sicherheitsmarkierungen (z.B. auf Identifizierungskarten, Fahrscheinen etc.). Die erfindungsgemäßen Hexaferrite sind aufgrund ihrer Form, Feinteiligkeit und ihrer hoher Koerzitivkraft besonders für den Einsatz als Sicherheitsmarkierung geeignet.

Versuche zur Auffällung von Barium auf verschiedene Eisenoxide führten bisher nicht zu geeigneten Hexaferriten, da das Barium nicht definiert auf den Teilchen vorlag und deshalb bei einem anschließenden Glühprozeß sich nicht mit dem Eisenoxid zu dem gewünschten Bariumhexaferrit umsetzte. Überraschenderweise gelang es jedoch durch Auffällung von Barium auf Co/Ti-dotierten Magnetite oder durch Auffällung von Barium auf mit anderen Metallen dotierte Magnetite einen geeigneten Bariumhexaferrit herzustellen. Ein geringer Bariumüberschuß, der zu einer Bildung der entsprechenden Menge Fe(II) statt Fe(III) führt, ist bei der Herstellung von hartmagnetischen Hexaferriten üblich. Gegenstand der Erfindung ist somit ein Verfahren zur Herstellung feinteiliger Bariumhexaferrite der allgemeinen Zusammensetzung:

$$M(I)_xM(II)_yM(III)_zFe_{12-(y+z)}O_{19}$$

wobei $O< = x< = 3$, $0,1< = (y+z)< = 3$, $(x+y+z)- > = 1,0$
M(I) = Ba, Sr, Ca, Eu, Pb ober eine Kombination von RE und einwertigen Kationen der Gruppe Li, Na, K, Rb, Cs, Ag, Tl und RE = La, Y, Sc, Bi oder andere Seltenerdmetalle ist und
M(II) = Fe(II), Mn, Co, Ni, Zn, Cu, Cd, Mg, Sn(II) und
M(III) = Ti, Zr, Hf, Ga, Sn(IV), Ge, In, Sc, Nb, Ta, V, As, Sb, Bi, Al, Cr(III), Mo, W
mit einem Teilchendurchmesser von 0,01 bis 1 $\mu$m und einer Teilchendicke von 0,01 bis 1 $\mu$m, wobei Teilchendurchmesser und Teilchendicke annähernd gleich sind, welches dadurch gekennzeichnet ist, daß Barium auf feinteilige dotierte oder undotierte Eisenoxide einer definierten Form, insbesondere auf solche Eisenoxide, die sich durch Teilchendurchmesser von 0,01 bis 1 $\mu$m und Teilchendicke von 0,01 bis 1 $\mu$m, wobei Teilchendurchmesser und Teilchendicke annähernd gleich sind, aufgefällt wird. Anstelle des Bariums des können auch andere Metalle wie Sr, Ca, Pb oder Kombinationen dieser Metalle eingesetzt werden.

Eine besonders bevorzugte Ausführungsform des erfindungsgemäßen Verfahrens besteht darin, daß $Fe_3O_4$ durch Fällung hergestellt wird und Barium als Salz einer langkettigen Carbonsäure auf den Magnetit aufgefällt wird. Hierzu wird eine $FeSO_4$-Lösung vorgelegt und unter Rühren mit $Fe_2(SO_4)_3$ versetzt. In 10 bis 15 min. wird NaOH-Lösung zugetropft und unter Rühren auf 70°C aufgeheizt. Bei dieser Temperatur wird Luft eingeleitet und so lange oxidiert, bis ein Potentialabfall beobachtet wird. Danach wird noch 75 min. oxidiert und anschließend abfiltriert. Das entstandene Produkt besteht aus Magnetit mit einer Teilchengröße von 0,01 bis 1 $\mu$m und einer würfelförmigen Morphologie oder einer Octaederform oder einer anderen auf dem kubischen System basierenden Form. Besonders bevorzugt wird jedoch ein Fällungsmagnetit mit der oben beschriebenen Teilchenform eingesetzt. Desweiteren ist eine Ausführungsform des erfindungsgemäßen Verfahrens die, daß bei der Herstellung des Fällungsmagnetits ein Teil des Fe(II) durch ein Metall der Gruppe (MII) oder M(III) oder durch eine Kombination aus zwei oder mehreren Metallen dieser Gruppen ersetzt wird, wobei M-(II) = Fe(II), Mn, Co, Ni, Zn, Cu, Cd, Mg, Sn(II) und M(III) = Ti, Zr, Hf, Ga, Sn(IV), Ge, In, Sc, Nb, Ta, V, As, Sb, Bi, Al, Cr(III), Mo, W ist.

Auf das in obiger Weise hergestellte Eisenoxid wird nun Barium in Form eines Salzes einer Carbonsäure aufgebracht. Hierzu wird eine etwa 25 %ige Suspension des entsprechenden Eisenoxids in Wasser dispergiert eine $Ba(OH)_2$-Lösung zugetropft und die Lösung der Carbonsäure in Ethanol oder ein wasserlösliches Salz der Carbonsäure zugetropft. Als Carbonsäure kann eingesetzt werden: Ameisensäure, Essigsäure, Buttersäure, Palmitinsäure, Stearinsäure, Laurinsäure oder eine ähnliche höhere Fettsäure, wobei besonders bevorzugt eine Carbonsäure mit mehr als 4 C-Atomen eingesetzt wird und insbesondere eine natürliche Fettsäure oder das Gemisch natürlicher Fettsäuren eingesetzt wird.

Es können im Rahmen der Erfindung ebenfalls eingesetzt werden: mehrwertige Carbonsäuren, wir Oxalsäure, Hydroxycarbonsäuren, Ketocarbonsäuren, Carbonsäuren mit mehreren funktionellen Gruppen und insbesondere Kohlensäure und deren Derivate.

Das entstandene Produkt wird anschließend filtriert und in einem Kammerofen pyrolysiert, wobei die Carbonsäure verbrannt wird. Anschließend wird auf den thermodynamischen Existenzbereich des Bariumhexaferrits erhitzt. Die entstandenen Hexaferritteilchen haben die Form des ursprünglichen Eisenoxidteilchens, so daß auf diese Weise sehr feinteilige Bariumferrite einer genau definierten Teilchenform mit sehr enger Teilchengrößenverteilung herstellbar sind. Eine weitere Ausführungsform des erfindungsgemäßen Verfahrens besteht darin, daß das mit Barium umhüllte Eisenoxid mit einem Sinterschutz umhüllt wird. Hierfür kann vorteilhaft $P_2O_5$ als Natriumphosphat, $SiO_2$ als Natriumsilicat, $Al_2O_3$ als Aluminat oder als Aluminiumsulfat oder $TiO_2$ als ein wasserlösliches Titanat oder ein anderes der aus der Pigmentherstellung bekanntes Sinterschutzmittel eingesetzt werden. Hierdurch ist es möglich den Bariumferrit auf noch höhere Temperaturen zu erhitzen, ohne daß eine starke Versinterung eintritt. Aufgrund ihrer hervorragenden Eigenschaften sind diese feinteiligen Bariumhexaferrite besonders geeignet für den Einsatz in magnetischen Aufzeichnungsmedien. Der besondere Vorteil des erfindungsgemäßen Verfahrens liegt in seiner besonderen Wirtschaftlichkeit, da die eingesetzten Rohstoffe preiswert und in großer Menge verfügbar sind und die Umsetzungen in Standardapparaturen bei Standardbedingungen durchgeführt werden können. Die folgenden Beispiele sollen die Erfindung verdeutlichen ohne sie jedoch einzuschränken, insbesondere wird der Fachmann durch Variation der Menge und der Art der Metallionen und der Herstellungsbedingungen im Rahmen dieser Erfindung jede gewünschte Zusammensetzung mühelos erhalten können.

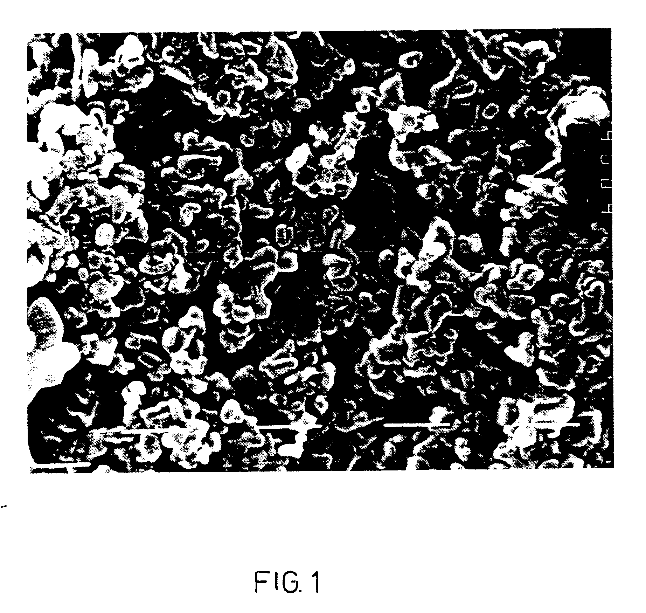

Fig. 1 zeigt eine elektronenmikroskopische Aufnahme der erfindungsgemäßen Bariumhexaferrite.

Die Erfindung wird im folgenden beispielhaft erläutert, ohne daß hierin eine Einschränkung zu sehen ist.

Beispiel 1

$(Ba_{1,1}Co_{0,85}Ti_{0,85}Fe_{10,3}O_{19})$

2,416 l $FeSO_4$-Lösung mit 248,37 g $FeSO_4$/l und 1.584 l Wasser werden in einen Reaktionsbehälter gegeben und mit Stickstoff begast. Dann wird eine $CoSO_4$-Lösung (92,54 g $CoSO_4$) in Wasser und eine $TiOSO_4$-Lösung mit 52,20 g $TiOSO_4$ in Wasser 15 Minuten gerührt. In 10 bis 15 Minuten wird eine 50 %ige NaOH-Lösung zugetropft und die Lösung wird auf 70°C aufgeheizt. Bei dieser Temperatur wird die Begasung auf 100 l/h Luft umgestellt und so lange begast, bis der Potentialsprung das Ende der Oxidation anzeigt. Der Potentialsprung wird mit einer Pt-Elektrode gegen Ag/AgCl gemessen. Danach wird noch weitere 75 Minuten gerührt, anschließend filtriert und das Filtrat getrocknet.

Es entstand ein Magnetit mit 27 % Fe(II)-Gehalt, der eine Teilchengröße von 0,1 bis 0,2 $\mu$m und eine Form von Octaedern hatte.

50 g des nach obiger Vorschrift hergestellten Magnetits werden mit 150 g Wasser dispergiert. Dann werden 450 ml einer 2 %igen Ba(OH)$_2$ $\cdot$ 8H$_2$O-Lösung (9,25 g Ba(OH)$_2$) und eine Lösung aus 278,4 g Ethanol und 21,63 g Dodecansäure zugetropft. Diese Lösung wird filtriert und getrocknet. Dieser Rückstand wird in einem Kammerofen 6 h bei 600° C pyrolysiert und anschließend bei 900° C 1 h geglüht. Es entstand ein Bariumferrit, der die gleiche Teilchenform und -größe wie der dotierte Magnetit aufwies. Der Bariumferrit hatte eine Koerzitivkraft von 94,22 kA/m, eine Sättigungsmagnetisierung von 51,8 nTm$^3$/g (bei 795,7 kA/m Feldstärke gemessen) und eine spezifische Oberfläche von 6,7 m$^2$/g. Auf der rasterelektronenmikroskopischen Aufnahme wird die Teilchengröße des Ferrits zu 0,2 bis 0,3 $\mu$m bestimmt.

Beispiel 2

Zn/Ti- dotierter Bariumferrit (Ba$_{1,1}$Zn$_{0,65}$Ti$_{0,65}$Fe$_{10,7}$O$_{19}$)

Eine Eisensulfatlösung wurde hergestellt durch Auflösung von 6860 g FeSO$_4$ $\cdot$ 7H$_2$O und 1680 g Fe$_2$(SO$_4$)3 in 25 l Wasser. Anschließend wurden unter Rühren eine Lösung von 558 g ZnSO$_4$ $\cdot$ 7H$_2$O in 2 l Wasser und 1867 g einer TiOSO$_4$-Lösung (Gehalt: 8,3 % als TiO$_2$ berechnet) zugegeben. Diese Lösung wurde unter Rühren und Stickstoffbegasung (300 l/h) auf 60° C erwärmt und dann 11,2 l Natronlauge mit 326 g NaOH/l in 75 Minuten zugetropft. Nach 2 Stunden Rühren unter Luftbegasung wurde der schwarze Niederschlag abfiltriert und gewaschen. Es enstand ein Zn/Ti-haltiger Magnetit mit einer spezifischen Oberfläche (BET 1-Punkt Methode) von 50 m$^2$/g, Ti-Gehalt: 3,0 %, Zn-Gehalt 4,7 %.

68 g des nach obiger Vorschrift hergestellten Magnetits werden mit 204 g Wasser dispergiert. Dazu gibt man 316 g 5 %ige Bariumchloridlösung (18,5 g BaCl$_2$ $\cdot$ 2H$_2$O = 15,8 g BaCl$_2$). Die Suspension wird auf 60° C erwärmt. Bei erreichter Temperatur, während starker Dispergierung, tropft man in 1 h 20 g Natriumdodecanatlösung zu (bestehend aus 6,1 g NaOH, 484 g H$_2$O, 30,4 g Dodecansäure) und läßt noch 10 Minuten dispergieren. Die Suspension wird gewaschen und filtriert. Der feuchte Filterkuchen wird in einem Kammerofen in 6 Stunden auf 900° C aufgeheizt und 1 Stunde bei dieser Temperatur geglüht. Der Tigel mit dem entstandenen Bariumferrit wird dann sofort aus dem heißen Kammerofen genommen. Nach dem Abkühlen wird der Bariumferrit schließlich noch gemahlen.

Der Bariumferrit hat eine Koerzitivkraft von 238,3 kA/m, eine Sättigungsmagnetisierung von 66,9 nTm$^3$/g (bei 1194 kAm Feldstärke gemessen) und eine spezifische Oberfläche von 9,9 m$^2$/g.

Beispiel 3

Undotierter Bariumferrit (Ba$_{1,1}$Fe$_{12}$O$_{19}$)

Eine Eisensulfatlösung wird durch Auflösung von 4050 g FeSO$_4$ $\cdot$ 7H$_2$O und 5100 g Fe$_2$(SO$_4$)$_3$ in 25 l Wasser hergestellt. Diese Lösung wird auf 75° C erhitzt und unter Rühren mit 7,6 l Natronlauge (mit 660 g NaOH/l) in einem Guß versetzt. Nach dreistündigem Rühren unter Luftbegasung (150 l/h) wurde der schwarze Niederschlag abfiltriert und mit Wasser gewaschen.

Es entstand ein Magnetit mit einer spezifischen Oberfläche (Bestimmung nach BET 1-Punktmethode) von 98 m$^2$/g.

Aus 39,5 g Dodecansäure und 525 g Ethanol wird eine 7 %ige Esterlösung hergestellt. Dazu gibt man 845 g einer 2 %igen Bariumhydroxidlösung (31,75 g Ba(OH)$_2$ $\cdot$ 8H$_2$O = 16,90 g Ba(OH)$_2$), wobei Bariumdodecant ausfällt.

Die weiße Suspension wird 15 Minuten bei 60° C gerührt. 107 g des nach obiger Vorschrift hergestellten Magnetits werden mit 320 g Wasser dispergiert. Beide Suspensionen werden zusammengegeben, 30 Minuten dispergiert und danach filtriert. Der feuchte Rückstand wird in einem Kammerofen in 6 Stunden auf 900° C aufgeheizt und 1 Stunde bei dieser Temperatur geglüht. Der Tigel mit dem entstandenen Bariumferrit wird dann sofort aus dem heißen Kammerofen genommen. Nach dem Abkühlen wird der Bariumferrit schließlich noch gemahlen.

Der Bariumferrit hat eine Koerzitivkraft von 448,6 kA/m, eine Sättigungsmagnetisierung von 63,5 nTm$^3$/g (bei 795,7 kA/m Feldstärke gemessen) und eine spezifische Oberfläche von 10,5 m$^2$/g. Die Teilchengröße beträgt 0,2 bis 0,3 Mikrometer.

**Ansprüche**

1. Verfahren zur Herstellung feinteiliger magnetischer Hexaferrite der allgemeinen Zusammensetzung:

$$M(I)_x M(II)_y M(III)_z Fe_{12-(y+z)} O_{19}$$

wobei $0 <= x <= 3$, $0,1 <= (y+z) <= 3$, $(x+y+z) >= 1,0$ und
M(I) = Ba, Sr, Ca, Eu, Pb oder eine Kombination von RE und einwertigen Kationen der Gruppe Li, Na, K, Rb, Cs, Ag, Tl und RE = La, Y, Sc, Bi oder andere Seltenerdmetalle ist und
M(II) = Fe(II), Mn, Co, Ni, Zn, Cu, Cd, Mg, Sn(II) und
M(III) = Ti, Zr, Hf, Ga, Sn(IV), Ge, In, Sc, Nb, Ta, V, As, Sb, Bi, Al, Cr(III), Mo, W
wobei die Teilchen einen Durchmesser von 0,01 bis 1 µm aufweisen, und Teilchendurchmesser und Teilchendicke annähernd gleich sind, durch Ausfällung von Barium auf Eisenoxid, dadurch gekennzeichnet, daß als Eisenoxide Fällungsmagnetite oder andere Eisenoxide der entsprechenden Form eingesetzt werden.

2. Verfahren gemäß Anspruch 1, dadurch gekennzeichnet, daß das Barium als Salz einer Carbonsäure aufgefällt wird.

3. Verfahren gemäß einem der Ansprüche 1 oder 2, dadurch gekennzeichnet, daß als Eisenoxid ein mit den Metallen M(II) oder M(III) oder einer Kombination von Metallen der Gruppe M(II) und M-(III) dotiertes Eisenoxid eingesetzt wird.

4. Verfahren gemäß einem oder mehrerer der Ansprüche 1 bis 3, dadurch gekennzeichnet, daß als Carbonsäure eine Carbonsäure mit mehr als 4 C-Atomen eingesetzt wird.

5. Verfahren gemäß einem oder mehrerer der Ansprüche 1 bis 4, dadurch gekennzeichnet, daß das mit Barium umhüllte Eisenoxid mit einem Sinterschutz umhüllt wird.

6. Verfahren gemäß einem oder mehrerer der Ansprüche 1 bis 5, dadurch gekennzeichnet, daß als Sinterschutz Phosphat, Silicat oder Verbindungen des Aluminiums, Chroms, Titans oder Zinns eingesetzt wird.

7. Verwendung der gemäß einem oder mehreren Ansprüchen 1 bis 6 hergestellten Hexaferrite in magnetischen Aufzeichnungsmedien und als nicht löschbare Sicherheitsmarkierungen.

FIG. 1